Europäisches Patentamt

European Patent Office

Office européen des brevets

(19)

(11) Veröffentlichungsnummer : **0 191 169**
**B1**

(12) **EUROPÄISCHE PATENTSCHRIFT**

(45) Veröffentlichungstag der Patentschrift :
30.08.89

(21) Anmeldenummer : 85115453.4

(22) Anmeldetag : 05.12.85

(51) Int. Cl.⁴ : **B 60 T   8/84**

(54) Blockierschutz-Bremssytem.

(30) Priorität : 17.01.85 DE 3501381

(43) Veröffentlichungstag der Anmeldung :
20.08.86 Patentblatt 86/34

(45) Bekanntmachung des Hinweises auf die Patenterteilung : 30.08.89 Patentblatt 89/35

(84) Benannte Vertragsstaaten :
CH DE FR GB LI SE

(56) Entgegenhaltungen :
EP—A— 0 002 073
EP—A— 0 056 432
DE—A— 3 042 125
DE—A— 3 201 045

(73) Patentinhaber : ROBERT BOSCH GMBH
Postfach 50
D-7000 Stuttgart 1 (DE)

(72) Erfinder : Goebels, Hermann-Josef, Ing. grad.
Alte Vaihingerstrasse 23
D-7141 Schwieberdingen (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

### Stand der Technik

Die Erfindung bezieht sich auf ein Blockierschutz-Bremssystem nach der Gattung des Haupt-anspruchs. Ein solches Blockierschutz-Bremssy-stem ist bekannt (EP-A-0 002 073).

Bei diesem bekannten Bremssystem wird der Bremsdruck der nicht sensierten Achse über Reduzierventile geführt, wobei die Druckreduzierung nur bei der Arbeit des Blockierschutzes wirksam wird.

Die Praxis zeigt aber, daß — bedingt durch Achs- oder Radlastverlagerungen oder auch durch veränderungen der Bremsenkennwerte — die Räder der mitgeführten Achse bereits blockieren können, bevor an den sensierten Rädern der Führungsachse eine Blockiergefahr erkannt wurde. Diese Gefahr ist besonders dann gegeben, wenn bei stärkerer Bremsung und demzufolge höherer Fahrzeugverzögerung auf griffiger Fahrbahn die mitgeführte Achse einer starken dyna-schen Achslaständerung unterliegt.

Wenn dann die Räder blockieren, treten meistens erhebliche Reifenschäden auf. Dazu kommt, daß die bekannte Einrichtung durch die verwendung zusätzlicher Magnetventile und Re-laisventile verhältnismäßig aufwendig ist.

Desweiteren ist es durch die DE-A-30 42 125 bereits an sich bekannt, bei Fahrzeugbremsanla-gen ein verzögerungsabhängig druckreduzieren-des Ventil zu verwenden.

Der Erfindung liegt die Aufgabe zugrunde, die eingangs genannten Nachteile zu vermeiden und ein Blockierschutz-Bremssystem zu schalten, bei dem der Bremsdruck an der mitgeführten Achse beim Auftreten einer starken Verzögerung, insbesondere bei griffiger Fahrbahn auch bei noch nicht arbeitender Blockierschutzeinrichtung reduziert werden soll. Dabei soll bei der überwiegenden zahl der Betriebsbremsungen mit geringer Fahrzeugverzögerung (Teilbremsungen) eine ungleiche Abnützung der Bremsbeläge vermieden werden.

Diese Aufgabe wird gemäß der Erfindung bei einem gattungsgemäßen Blockierschutz-Bremssystem durch die kennzeichnenden Merkmale des Patentanspruchs gelöst.

### Zeichnung

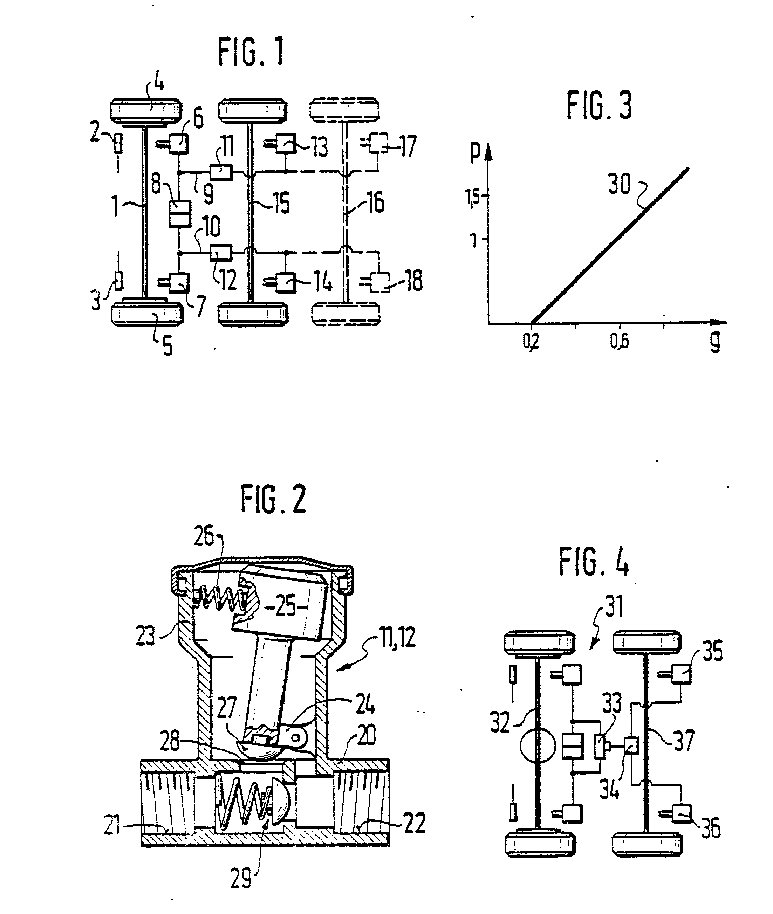

Mehrere Ausführungsbeispiele der Erfindung sind in der Zeichnung dargestellt und in der nachfolgenden Beschreibung näher erläutert. Es zeigen : Figur 1 ein Doppelachs- bzw. Dreiachs-Aggregat mit einer Blockierschutzeinrichtung und mit Druckreduzierventilen, Figur 2 ein Druckreduzierventil der Figur 1 im Schnitt, Figur 3 ein Diagramm über die Druckreduzierung in Abhängigkeit von der Fahrzeugverzögerung und Figur 4 eine andere Art einer Mehrachsregelungs.

### Beschreibung der Ausführungsbeispiele

Ein Mehrfach-Kraftfahrzeug hat eine Fahrzeugachse 1, die mit Sensoren 2 und 3 bestückt ist, welche die Räder 4 und 5 der Achse 1 überwachen. Jedes Rad 4 und 5 hat einen Bremszylinder 6 und 7, die über ein Zweikanal-Blockierschutz-Drucksteuerventil 8 angesteuert werden. Das Drucksteuerventil 8 kann aber auch aus zwei einkanaligen Drucksteuerventilen bestehen. Die zur Blockierschutzeinrichtung gehörende Elektronik ist nicht näher dargestellt.

Zwischen dem Drucksteuerventil 8 und den Bremszylindern 6 und 7 der sensorüberwachten Achse 1 nimmt je eine Bremsleitung 9 bzw. 10 ihren Ausgang, die über je ein verzögerungsabhängiges Druckreduzierventil 11 bzw. 12 zu je einem Bremszylinder 13 bzw. 14 einer nicht sensorüberwachten, mitgeführten Fahrzeugachse 15 verlaufen.

Wie in der Zeichnung gestrichelt dargestellt ist, kann der mitgeführten zweiten Fahrzeugachse 15 noch eine dritte Fahrzeugachse 16 mit Bremszylindern 17 und 18 nachgeordnet sein. Diese dritte Fahrzeugachse 16 ist ebenfalls mitgeführt. In ihren Bremszylindern 17 und 18 herrscht durch Anschluß an die Bremszylinder 13 und 14 der gleiche Bremsdruck wie in den Bremszylindern der Achse 15. Dann ist das Achsaggregat ein 3-Achsaggregat.

Dabei sind die beiden mitgeführten Fahrzeugachsen 15 und 16 bremsdruckmäßig pro Regelkanal seitenweise getrennt an ein verzögerungsabhängiges Druckreduzierventil 11 bzw. 12 ange-schlossen.

Dieses verzögerungsabhängige Druckreduzier-ventil 11 oder 12 hat, wie in der Figur 2 dargestellt ist, ein Gehäuse 20 mit Anschlüssen 21 und 22 für die Bremsleitung 9 bzw. 10. In einem Gehäuseaufsatz 23 ist über eine Hebelanordnung 24 ein Massekolben 25 schwenkbeweglich gelagert, wobei der Massekolben 25 über eine Rückhaltefeder 26 innen am Gehäuseaufsatz 23 abgestützt ist. Am unteren Teil der Hebelanordnung 24 ist ein Schließkörper 27 vorgesehen, der mit einem gehäusefesten Ventilsitz 28 als Druckreduzierventil zusammenarbeiten kann. Außerdem ist im Ventilgehäuse 20 zwischen den beiden Anchlüssen 21 und 22 ein Rückschlagventil 29 vorgesehen, das einen Luftdurchgang in Richtung Drucksteuerventil 8 erlaubt, um den Bremsdruck abbauen zu können.

Wie die Darstellung erkennen läßt, ist das Druckreduzierventil einfach aufgebaut. Der Massekolben 25 kann durch die Hebelanordnung klein ausgeführt werden, die Verwendung von Kunststoffteilen z. B. für die Hebelanordnung ist möglich.

Die Figur 3 zeigt ein Diagramm, bei dem auf der Ordinate der Druck p und auf der Abszisse die Verzögerung g aufgetragen sind. Die eingezeichnete Kurve 30 gibt eine mögliche Druckfunktion des Druckreduzierventils 11 bzw. 12 wieder.

In der Figur 4 ist ein Zweiachs-Aggregat 31 mit einer sensierten Führungsachse 32 dargestellt, bei dem bei sonst gleichem Aufbau wie in Figur 1 ein Zweiwegeventil 33 verwendet ist, das den jeweils niedrigeren Bremsdruck durchsteuert. Diesem Zweiwegeventil 33 ist dann ein einziges verzögerungsabhängiges Druckreduzierventil 34 nachgeordnet, über das zwei Bremszylinder 35 und 36 einer mitgeführten Fahrzeugachse 37 versorgt werden.

Wirkungsweise

In Abhängigkeit von der Fahrzeugverzögerung wird der Bremsdruck über das Druckreduzierventil bei geringer Fahrzeugverzögerung aufgrund der Rückhaltefeder 26 z. B. < 0,2 g ohne Reduzierung durchgesteuert.

Bei höherer Fahrzeugverzögerung, z. B. > 0,2 g, überwiegt die Massenkraft des Massekolbens 25 über der der Rückhaltefeder 26, so daß das Ventil 27/28 schließt. Der Bremszylinderdruck der Räder der mitgeführten Achsen 15, 16 und 37 wird dadurch, entsprechend der momentanen Fahrzeugverzögerung, auch ohne Blockierschutzregelung reduziert.

Dadurch ist einerseits erreicht, daß bei der überwiegenden Anzahl der Bremsungen von < 0,2 g, die als Teilbremsung wirksam sind, durch das Offenbleiben des Druckreduzierventils 11 bzw. 12 bzw. 34 an allen Bremszylindern der gleiche Bremsdruck eingesteuert wird und somit eine gleichmäßige Abnutzung von Bremsbelag und Reifen sichergestellt ist.

Andererseits ist durch die bei stärkeren Bremsungen durch Schließen des Druckreduzierventils 11 bzw. 12 bzw. 34 auftretende, verzögerungsabhängige Bremsdruckreduzierung das gefährliche und Reifen zerstörende Radblockieren auf griffiger Fahrbahn wirksam verhindert, vor allen auch dann, wenn der Regelvorgang an der sensierten Achse noch nicht angelaufen ist.

Patentansprüche

1. Blockierschutz-Bremssystem für Mehrachs-Fahrzeuge mit mindestens einer sensorüberwachten Treibachse (1) und einer nicht sensorüberwachten Fahrzeugachse (15, 16, 37), wobei die Räder der nicht sensorüberwachten, mitgeführten Fahrzeugachse (15, 16, 37) durch den Bremsdruck an der sensorüberwachten Fahrzeugachse (1) mitgebremst werden und wobei den Bremszylindern (13, 14 ; 17, 18 ; 35, 36) der mitgeführten Achse(n) (15, 16 ; 37) ein druckreduzierendes Ventil (11, 12 ; 34) vorgeschaltet ist, dadurch gekennzeichnet, daß das druckreduzierende Ventil (11, 12 ; 34) mit verzögerungsabhängigen Schaltmitteln (Massekolben 25) ausgerüstet ist und bereits bei einem Bremsdruck anspricht, bei dem der Blockierschutz noch nicht arbeitet.

2. Blockierschutz-Bremssystem nach Anspruch 1, dadurch gekennzeichnet, daß die Druckreduzierung des Ventils (11, 12' ; 34) nur oberhalb bestimmter Fahrzeugverzögerungen wirksam ist.

3. Blockierschutz-Bremssystem nach Anspruch 1 oder 2, dadurch gekennzeichnet, daß für jeden Bremszylinder (13, 14) ein eigenes Ventil (11, 12) verwendet ist.

4. Blockierschutz-Bremssystem nach Anspruch 1 oder 2, dadurch gekennzeichnet, daß für die Bremszylinder (35, 36) der nicht sensorüberwachten Fahrzeugachse (37) ein gemeinsames Ventil (34) verwendet ist und daß dieses Ventil einem Zweiwegeventil (33) nachgeordnet ist.

Claims

1. Anti-slip braking system for multi-axle vehicles with at least one sensor-monitored driving axle, (1) and one non-sensor-monitored vehicle axle (15, 16, 37), the wheels of the non-sensor-monitored, idling vehicle axle (15, 16, 37) being braked as well by the braking pressure at the sensor-monitored vehicle axle (1) and the brake cylinders (13, 14 ; 17, 18 ; 35, 36) of the idling axle(s) (15, 16 : 37) being preceded by a pressure-reducing valve (11, 12 ; 34), characterized in that the pressure-reducing valve (11, 12 ; 34) is equipped with deceleration-dependent switching means (mass piston 25) and already responds at a brake pressure at which the anti-slip system is not yet operating.

2. Anti-slip braking system according to Claim 1, characterized in that the pressure reduction of the valve (11, 12' ; 34) is only effective above certain vehicle decelerations.

3. Anti-slip braking system according to Claim 1 or 2, characterized in that an own valve (11, 12) is used for each brake cylinder (13, 14).

4. Anti-slip braking system according to Claim 1 or 2, characterized in that a joint valve (34) is used for the brake cylinders (35, 36) of the non-sensor-monitored vehicle axle (37) and in that this valve is followed by a two-way valve (33).

Revendications

1. Système de freinage anti-blocage pour un véhicule à plusieurs essieux comportant au moins un essieu-moteur (1) surveillé par un capteur et un essieu de véhicule (15, 16, 37) non surveillé par un capteur, les roues des essieux tirés (15, 16, 37) sur surveillés étant également freinées par la pression de freinage appliquée à l'essieu (1) surveillé, et les cylindres de frein (13, 14 ; 17, 18 ; 35, 36) du ou des essieux tirés (15, 16 ; 37) comportant en amont, une vanne-réductrice de pression (11, 12 ; 34), système caractérisé en ce que la vanne-réductrice de pression (11, 12 ; 34) est munie de moyens de commutation dépendant de la décélération (piston massique 25) et se mettant en œuvre déjà pour une pression de freinage à laquelle le moyen de protection anti-blocage n'est pas encore mis en œuvre.

2. Système de freinage anti-blocage selon la revendication 1, caractérisé en ce que la réduction de pression de la vanne (11, 12' ; 34) ne se met en œuvre qu'au-dessus d'une décélération prédéterminée du véhicule.

3. Système de freinage anti-blocage selon la revendication 1 ou 2, caractérisé en ce que pour chaque cylindre de frein (13, 14), il est prévu une vanne distincte (11, 12).

4. Système de freinage anti-blocage selon la revendication 1 ou 2, caractérisé en ce que dans les cylindres de frein (35, 36) de l'essieu (37) non surveillé par des capteurs, on a une vanne commune (34) et cette vanne comporte en aval une vanne à deux voies (33).

# FIG. 1

# FIG. 3

# FIG. 2

# FIG. 4

1